# EUROPEAN PATENT SPECIFICATION

(11) **EP 2 096 907 B1**
(45) Date of publication and mention of the grant of the patent: **17.07.2013**
(21) Application number: 07839530.8
(22) Date of filing: 12.10.2007
(51) Int. Cl.: A01D 89/00, A01D 80/02

(54) **NON-CIRCULAR WIRE CROP PICK-UP TOOTH**
ERNTEAUFNAHMEZAHN MIT NICHT KREISFÖRMIGEM DRAHT
DENT DE RAMASSAGE DE RÉCOLTE À FIL NON CIRCULAIRE

(30) Priority: 15.12.2006 US 611236
(43) Date of publication of application: 09.09.2009
(73) Proprietor: Deere & Company, Moline, IL 61265 (US)
(72) Inventor: DERSCHEID, Daniel Eric, Hedrick, IA 52563 (US); ANSTEY, Henry Dennis, Ottumwa, IA 52501 (US)
(74) Representative: Holst, Sönke
(86) International application number: PCT/US2007/021896
(87) International publication number: WO 2008/073182

(56) References cited:
- DE-A1- 3 411 722
- US-A- 3 253 393
- US-A- 3 531 927
- US-B1- 6 327 840

## Description

### Field of the Invention

The present invention relates to crop pick-up machinery, and, more specifically relates to pick-up spring teeth.

### Background of the Invention

Teeth used on crop pick-up machinery have been considered a common replacement item on such machinery due to yielding and breakage since their conception due to being subject to rough ground and tough crop conditions. Although replacing teeth has become a routine service activity, any means to minimize the amount of replacement is valued by customers. Pick-up teeth are designed to flex out of the way of obstacles and relieve overload stresses. Two common pick-up tooth designs are coil torsion spring teeth or rubber-mounted tines, both using round wire. Both of these designs rely on dampening to prevent yield and fatigue due to rebound, with the torsion spring teeth using inter-coil and coil-to-mounting surface friction to produce dampening, while the rubber mounted teeth use the dampening nature of the rubber to slow the rebound of the tine.

Stiff or ultra-stiff pick-up teeth (see U.S. Patent No. 5,394,682), which are measurably stiffer than previous tooth designs to aid in positive crop feeding, experience relatively high stress levels leading to yielding and fatigue failures during field operation. When mounted to tooth bars constructed as channel members (see U.S. Patent No. 6,327,840, for example), the spring coil joined to the tines tends to rotate, when the tine is under load, about an instant center located at the line contact between the outer first coil of the spring coil and the channel leg opposite the tine under load such that the load between the first coil and the leg is concentrated, resulting in undue stress on the tine coil and breakage after only a relatively short number of load cycles.

DE 34 11 722 A1 describes a haymaking machine with tines having a coiled central section and end teeth. In one embodiment, the tines have a rectangular cross section with a circular rearward face.

US 3 253 393 A describes a rake tooth with a square cross section.

Thus, the problem to be solved is to maintain the use of stiff or ultra-stiff teeth for superior crop feeding performance, but to lower the stresses experienced by the teeth so as to result in a substantially longer tooth life.

### Summary of the Invention

An object of the invention is to provide a spring tooth having a stiffness which is equivalent to that of the aforementioned patented stiff or ultra-stiff teeth, while having one or more of the characteristics of improved feeding, reduced stress, or improved dampening.

A pick-up includes a reel having a plurality of tooth support bars equipped with a plurality of spring teeth having tines for engaging and moving crop as the reel rotates during operation. The spring teeth each are constructed of spring wire coupled to an associated one of said tooth support bars. A coiled spring section is joined to, and forming a continuation of, each of said at least some tines and defines a resilient mounting coupled to the associated one of said tooth support bars. At least some of said spring teeth are non-circular in cross-section and each including a tine having parallel leading and trailing substantially flat first and second sides, as considered relative to a direction of movement of said tine during operation. Said first and second sides are joined by parallel flat opposite lateral sides.

It is desirable to dispose the two flats of the tooth having the longer dimension so that they are approximately perpendicular to the direction of crop loading so as to prevent side deflection and yielding and to improve crop interaction.

Additionally, it is desirable to provide rounded corners where the flat sides of the tine meet each other so as to reduce geometrical stress concentrations and force the maximum stresses away from the inner and outer diameters of the spring coil of the teeth and, thus, closer to the neutral axis of the wire.

The above object and other objects will become apparent from a reading of the ensuing description together with the appended drawings.

### Brief Description of the Drawings

Fig. 1 is a schematic right side view of a large round baler having a pick-up with which teeth constructed in accordance with the present invention are particularly useful.
Fig. 2 is a vertical sectional view taken through a left end region of a portion of the baler of Fig. 1 including the crop pick-up which is equipped with stiff spring teeth constructed in accordance with the present invention and operating to feed crop directly into the baling chamber of the baler.
Fig 3 is front view of a central portion of the pick-up reel shown in FIG. 2 with one leg of some of the parts being shown in section for clarity.
Fig. 4 is a perspective view of a spring tooth constructed in accordance with the principles of the present invention.

### Description of the Preferred Embodiment

Preliminarily, it is to be noted that various components are described as existing in pairs while only one of each pair is illustrated, with it to be understood that the unshown component is the same as, or a mirror image of, the illustrated component.

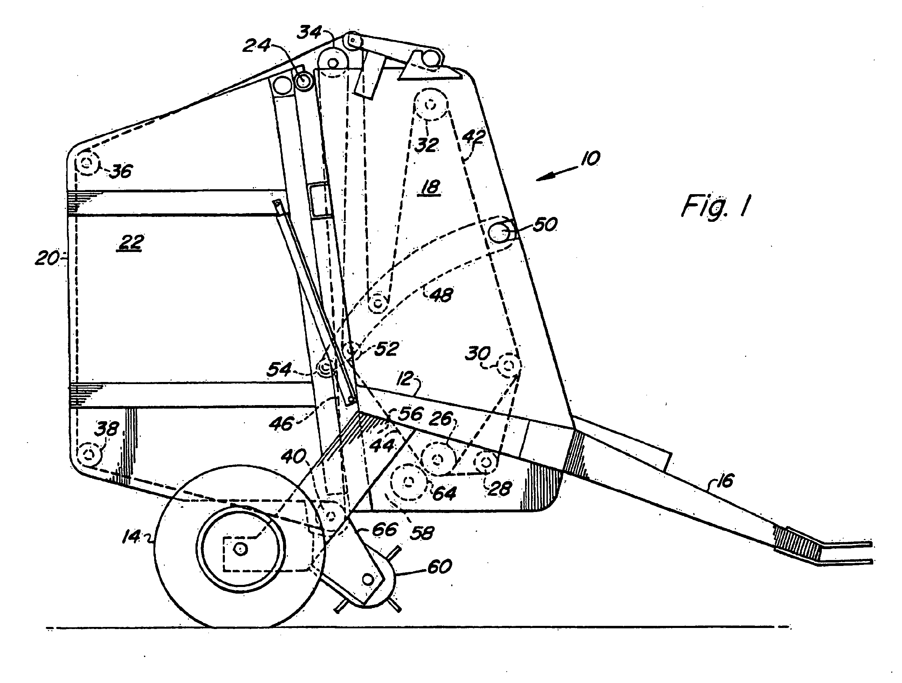

Referring now to Fig. 1, there is shown a baler 10 of the type for making large cylindrical bales and commonly called a large round baler. The baler 10 comprises a main frame 12 supported on a pair of ground wheels 14 and having a draft tongue 16 secured thereto and adapted for being connected to a towing vehicle, such as an agricultural tractor. A pair of transversely spaced vertical sidewalls 18 is joined to the frame 12, with the sidewalls 18 having respective upright rear edges. A bale discharge gate 20 including opposite side walls 22 is vertically pivotally attached, as at 24, to upper rear locations of the sidewalls 18. The sidewalls 22 have forward upright edges which abut against the rearward edges of the sidewalls 18 when the gate 20 is in a lowered, closed position, as shown.

The pairs of sidewalls 18 and 22 rotatably support the opposite ends of a plurality of bale-forming belt support rolls adjacent the periphery of the sidewalls 18 and 22. Specifically, beginning at a lower central location of the sidewalls 18 and proceeding counterclockwise, there are mounted a driven roll 26, a lower front roll 28, an intermediate front roll 30, an upper front roll 32, and an upper rear roll 34. Continuing counterclockwise from an upper rear location of the gate sidewalls 22, there are mounted an upper rear roll 36, a lower rear roll 38 and a lower front roll 40. A plurality of endless bale-forming belts 42 are spaced one from another across the space between the opposite side walls 18 and 22. Except for some of the belts 42, which skip the lower front roll 28, the belts are trained so that they serially engage the rolls 26 through 32, then 36 through 34. A front run 44 of the belts 42 extends upwardly from the driven roll 26 to the roll 34. Similarly, a rear run 46 of the belts 42 extends upwardly from the lower front gate roll 40 to the roll 34.

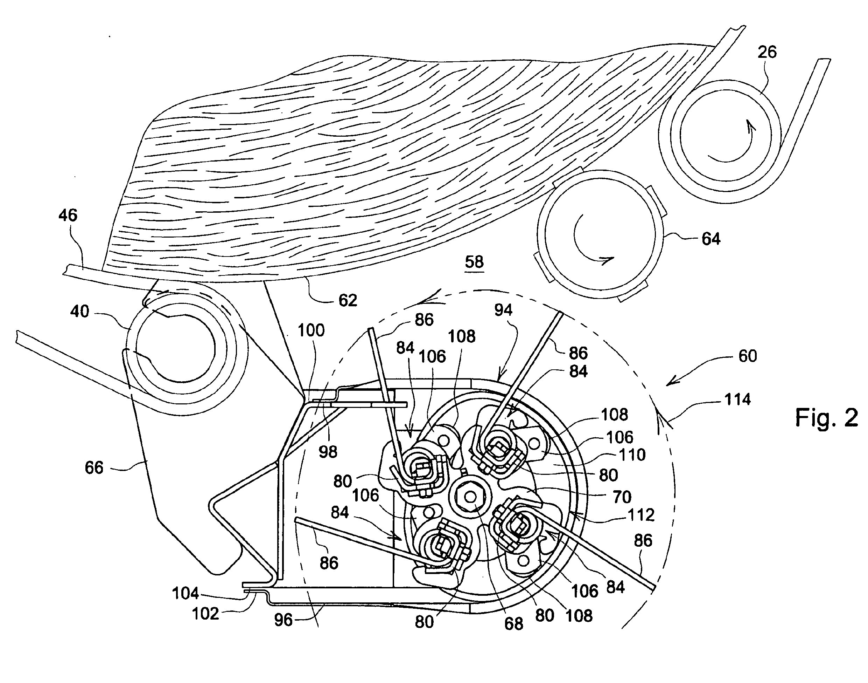

A tensioning arm assembly includes a pair of rearwardly extending tensioning arms 48, which are joined to a cross member 50 having its opposite ends mounted for pivoting about a horizontal axis located at a mid-height location of the sidewalls 18. Extending between, and rotatably mounted to, rear end locations of the arms 48 are front and rear idler rolls 52 and 54, respectively. The front and rear runs 44 and 46 of the belts 42 respectively converge upwardly from the drive roll 26 and the lower front gate roll 40, and pass closely to each other between the rolls 52 and 54 and, as viewed in vertical cross section from the side, define a baling chamber 56, which is wedge-shaped prior to any crop being introduced through an inlet 58 provided at the bottom of the chamber 56, as shown in FIG. 1. The inlet 58 (see also Fig. 2) extends between the driven roll 26 and the lower front gate roll 40.

Crop products are introduced into the inlet 58 by a pick-up 60 for being rolled into a bale 62 by the action of the front and rear runs 44 and 46 of the belts 42, which are respectively driven so as to travel toward and away from the inlet, and initially also by a starter roll 64 rotatably mounted in the sidewalls 18 adjacent to, and being driven in the same direction as, the drive roll 26 so that it operates to strip crop being carried downwardly by the front run 44 of the belts 42. As the bale 62 is being formed, the chamber 56 yieldably expands against the force established in the belts by a tensioning system including the pair of tensioning arms 48 together with springs and hydraulic cylinders (not shown) coupled between the walls 18 and the arms 48 for resisting upward movement of the arms. Once the bale 62 reaches a certain size, the weight thereof is borne mainly by the lower front gate roll 40, but also by the drive roll 26 and the starter roll 64.

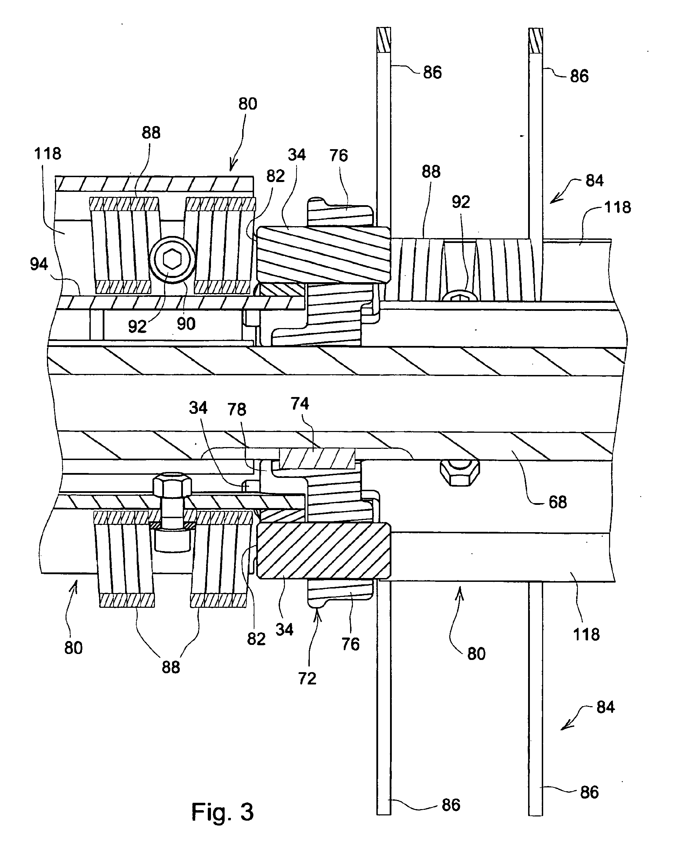

As can best be seen in FIGS. 2 and 3, the pick-up 60 has a frame 66 pivotally mounted to the baler frame 12 for moving or being adjusted about an axis, which in this case is coincident with the axis of rotation of the lower front gate roll 40. The pick-up frame 66 is shown in the upper range of its movement or adjustment. The pick-up 60 includes a tined rotor or reel structure including a center support shaft 68 comprising a major tubular middle section having right- and left-hand ends to hexagonal end sections are respectively fixed and on which a pair of spiders 70 are respectively fixedly mounted. The spiders 70 each have four, equal-angularly spaced, radially extending arms, with the arms of the spider 70 carried by the hexagonal end section defining the right-hand end of the support shaft 68 being offset annularly by an angle of 45° relative to the arms of the spider 70 carried by the hexagonal end section defining the left-hand end of the support shaft 68. A circular center tooth bar support 72 is fixed to the support shaft 68, as by a key 74, at a location halfway between the spiders 70. As viewed from a location forward of the baler 10, right- and left-hand sets of four cylindrical mounting bosses 76 and 78, respectively, are provided at equal-angularly spaced locations on opposite right- and left-hand faces of the support 72. The set of bosses 76 are angularly offset from the set of bosses 78 by an angle of 45°, with circular mounting holes in the bosses 78 being axially aligned with similar mounting holes provided in the arms of the spider 70 at the right-hand end of the support shaft 68, and with mounting holes in the bosses 76 being axially aligned with similar mounting holes provided in the arms of the spider 70 at the left-hand end of the support shaft 68.

Channel-shaped tooth bars 80 extend between each set of axially aligned mounting holes provided in each of the arms of the spiders 70 and the bosses 76 and 78 formed on the center tooth bar support 72, with cylindrical pins 82 that are provided at opposite ends of the tooth bars 80 being pivotally received in the axially aligned mounting holes.

Secured at transversely spaced locations along each tooth bar 80 are coil spring teeth 84. Each tooth 84 is of a known construction including a pair of spring tines 86 joined to, and projecting from opposite ends of, a double spring coil section 88 including two coil sections joined together by a central bight or loop 90 engaged by a mounting bolt 92 which secures the spring tooth 84 to a web 94 of the tooth bar 80. As considered axially across the length of the center support shaft 68, sets of four spring teeth 84 are respectively mounted to common locations of the four tooth bars 80 at each of the opposite sides of the center tooth bar support 72, with first tines 86 of each of the spring teeth 84 being located co-planar to each other, and with second tines 86 of each of the teeth 84 also being located coplanar to each other.

A U-shaped stripper assembly 94 opens rearwardly and comprises separate strippers 96 in the form of bands located between each set of coplanar tines 86 of each group of four teeth 84 so that slots are formed between adjacent strippers for permitting free travel of the tines there through. As viewed from the side, each stripper 96 has a forward, semi-circular nose portion joined to upper and lower parallel legs, with a rear end of the upper leg being bolted, as at 98, to an upper, flat transverse surface 100 of the pick-up frame 66, and with the lower leg being bolted, as at 102, to a lower flat transverse surface 104 of the frame 66. Provided at each of the right- and left-hand ends of the center shaft 68 for effecting controlled rocking motion of the tooth bars 80, and hence desired motion of the tines 86 as the tooth bars revolve with the shaft 68 and spiders 70, is a cam assembly including arms 106 respectively welded to the outer ends of the pins 82 respectively secured to the right-hand ends of the four tooth bars 72 located rightward of the center tooth bar support 72, and the pins 82 respectively secured to the left-hand ends of the four tooth bars 72 located leftward of the center tooth bar support 72. Mounted to each of the arms 106 is a cam roller 108 received in an endless, inwardly opening, substantially D-shaped track 110 of a cam 112 that is bolted to an upright side (not shown) of the pick-up frame 66. As the rollers 108 travel along the track 108, they cause the tooth bars 72 to be rocked so as to cause the outer ends of the tines 86 of the spring teeth 84 to trace a path, indicated at 114. It can be seen that as the tines 86 reach the top, or twelve o'clock position, of their travel, they are caused to swing forwardly so that a major component of the movement of the tines is downward as the tines are withdrawn below the plane of the upper legs of the strippers 96. To this point, the description has been that of a conventional baler and pick-up.

However, applicants pick-up is not conventional because the spring teeth 84, and hence tines 86, are constructed of wire having a square cross section. However, it is for convenience that the teeth 84 are the only type of tooth shown and that these teeth are located across the whole width of the pick-up 60. While stiff teeth could be used across the entire width of the pick-up 60, normally, it is sufficient for stiff coil spring teeth to be located only at opposite end regions of a pick-up for effecting efficient crop feeding operation since it is at these end regions that the most difficult feeding conditions exist, especially when the pick-up has a width which is greater than that of the baling chamber of the baler, with auxiliary feeding devices being located for receiving crop delivered by the pick-up and operating so as to narrow the flow of crop prior to the crop reaching the baling chamber.

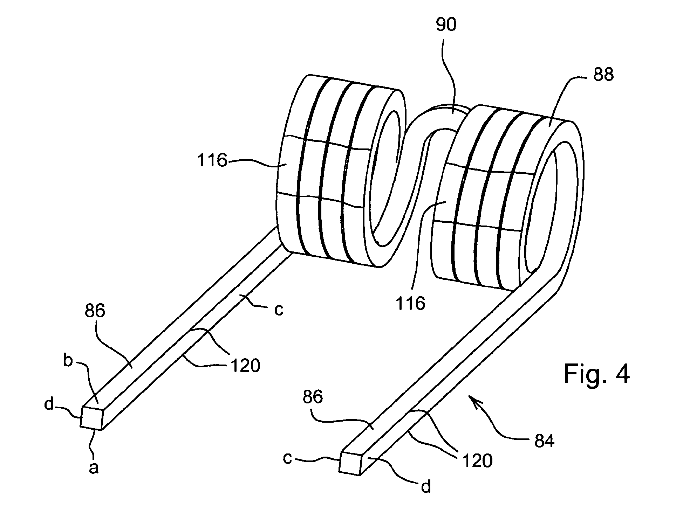

Referring now to FIG. 4, it can be seen that the coil spring tooth 84 includes parallel first flat sides a and b, respectively, disposed at leading and trailing sides of each tine 86, as considered relative to the direction the tines are moving when in operation and contacting crop material. In other words, the surfaces a and b are disposed perpendicular to the direction of travel of the baler 10 during operation. As considered relative to the spring coil section 88, inner and outer flat sides c and d constitute the remaining parallel sides of each of the tines 86. The flat sides c and d are aligned approximately parallel to the direction of the winding of the double spring coil section 88. It follows then that the sides c and d are disposed parallel to the direction of rotation of the spring teeth 84 as they rotate into engagement with crop material, and hence, are disposed parallel to the direction of travel of the baler 10 during operation. Depicted is an area or zone 116 on the spring coil section 88 of the tooth 84 which is approximately diametrically opposite the location where the tines 86 depart from the spring coil section 88, this area or zone being that where the coil engages a leg 118 of the associated tooth bar 80 when the tines 86 are under load. As can be seen, contact of the coils with the tooth bar 80 takes place over a relatively large area as compared to what would occur with the spring coils of the round spring wire prior art teeth which only make line contact with the tooth bar. In order to further reduce stresses in the spring teeth 84, a small radius (not illustrated) is provided at each edge 120 of the square wire where the flat sides a and b join the lateral sides c and d.

In comparing a prior art spring tooth constructed of 6 mm diameter round wire to a spring tooth 84 constructed of square wire having 5.28 mm sides (these tines are equal in stiffness), it was found that the spring tooth 84 exhibited superior crop carrying ability due to presenting an effectively wider surface to capture and carry crop, while creating a smooth ramp-like surface to lift and release the crop. Further, it was found that this wider surface resulted in crop being more effectively stripped from the tines of the tooth 84 apparently due to a reduction in crop "hair pinning" on the tines.

Concerning the operating life of the prior art spring tine constructed of round wire, and the spring tine of the present invention, which is constructed of wire having a square cross section, stress calculations were made assuming the tines of each of the spring teeth to be a cantilever beams. The calculated theoretical yield point for the round wire prior art tine was calculated to occur at a deflection of 55° as compared to 70° for the square wire tine of the present invention. Based on this information, the theoretical fatigue life of the spring tooth 84 was calculated to be approximately 5x that of the round wire spring tooth. However, a bench test wherein both spring tooth designs were cycled only once on a so-called drum of destruction, the average fatigue life of the spring tooth 84 was only about 2.5x that of the round wire spring tooth. Despite the calculated theoretical results and the lab results, actual results in the field when baling corn stalks has shown the teeth 84 to have a field durability which appears to exceed the theoretical and lab results when compared with teeth constructed of round wire, with the latter appearing to yield during the rebound of the tine after it was flexed under load, and also under conditions wherein the tines were loaded so as to spring sideways, such as occurs when turning at the end of a field, for example. The spring teeth 84 constructed of square wire did not yield much at all and it is thought that by reducing the bending, a reduction in breakage should result due to the preservation of the effects of shot peening, which is done during the manufacturing process, and due to the tines not bending to the extent that they come into interference with the strippers, frame and tooth bars.

Other factors thought to contribute to the superior field durability of the spring teeth 84 when compared to round wire teeth, is the larger surface contact between the coils of the coil section 88, and the larger surface area at the coil-to-tooth bar interface dampen the tooth movement when released after being flexed, which lessens stress. This is in contrast to the coils of the coil section of the prior art round wire teeth which have line or point contact with the tooth bar and line contact each other, which results in the coils of the round wire teeth undergoing undue stress when under a high load, which leads to yielding and failure. Also, because of the square wire cross section, the teeth 84 are softest in the direction of tooth travel and in the direction perpendicular to tooth travel. Therefore, angular overloads as are generated by ground contact during turning the baler 10 in the field will be resisted by the diagonal dimension of the tine, thus preventing yielding. No such larger dimension is present in a round tine.

While the teeth 84 of the present invention have been described in conjunction with a round baler 10, it is to be understood that this is only exemplary. For example, the teeth 84 could be used with balers for making small or large parallelepiped bales or with pick-ups for forage harvesters.

## Claims

1. A pick-up (60) including a reel (68, 70, 72) having a plurality of tooth support bars (80) equipped with a plurality of spring teeth (84) having tines (86) for engaging and moving crop as the reel (68, 70, 72) rotates during operation, said spring teeth (84) each being constructed of spring wire coupled to an associated one of said tooth support bars (72), a coiled spring section (88) being joined to, and forming a continuation of, each of said at least some tines (86) and defining a resilient mounting coupled to said associated one of said tooth support bars (80), **characterized in that** at least some of said spring teeth (84) being non-circular in cross-section and each including a tine (86) having parallel leading and trailing substantially flat first and second sides (a, b), as considered relative to a direction of movement of said tine during operation; with said first and second sides being joined by parallel flat opposite lateral sides (c, d).

2. The pick-up (60), as defined in claim 1 wherein said first substantially flat parallel side (a, b) has a width dimension that is greater than a width dimension of said third and fourth flat sides (c, d).

3. The pick-up (60), as defined in claim 2 wherein adjacent sides (a, b, c, d) are joined by radiused corners (120).

4. The pick-up (60), as defined in one of claims 1 to 3 wherein said tooth support bars (80) are each defined by a channel member; and each of said at least some of the tines (86) having its coil section (88) mounted to a web of the channel member and abutting a leg of said channel on an opposite side of said coil section (88) from a location where said tine (86) extends from said coil section (88).

## Patentansprüche

1. Pickup (60) mit einer Spindel (68, 70, 72), die mehrere Zahntragschienen (80) aufweist, die mit mehreren Federzähnen (84) ausgestattet sind, die Zinken (86) zum Ergreifen und Bewegen von Erntegut bei Drehung der Spindel (68, 70, 72) während des Betriebs aufweisen, wobei die Federzähne (84) jeweils aus Federdraht hergestellt sind, der mit einer zugehörigen der Zahntragschienen (72) gekoppelt ist, wobei ein spiralförmiger Federabschnitt (88) mit jedem der mindestens einigen Zinken (86) verbunden ist, eine Fortsetzung davon bildet und eine elastische Halterung, die mit der zugehörigen der Zahntragschienen (80) gekoppelt ist, definiert, **dadurch gekennzeichnet, dass** mindestens einige der Federzähne (84) einen nicht kreisförmigen Querschnitt aufweisen und jeweils einen Zinken (86) enthalten, der eine im Wesentlichen flache erste und zweite Seite (a, b) aufweist, die parallel verlaufen und je nach Betrachtung bezüglich einer Bewegungsrichtung des Zinkens während des Betriebs vorlaufend und nachlaufend sind, wobei die erste und die zweite Seite durch parallele flache, gegenüberliegende Lateralseiten (c, d) miteinander verbunden sind.

2. Pickup (60) nach Anspruch 1, wobei die erste im Wesentlichen flache parallele Seite (a, b) eine Breitenabmessung aufweist, die größer als eine Breitenabmessung der dritten und vierten flachen Seite (c, d) ist.

3. Pickup (60) nach Anspruch 2, wobei aneinander wobei angrenzende Seiten (a, b, c, d) durch gerundete Ecken (120) miteinander verbunden sind.

4. Pickup (60) nach einem der Ansprüche 1 bis 3, wobei die Zahntragschienen (80) jeweils durch ein Kanalglied definiert sind und der Spiralabschnitt (88) jedes der mindestens einigen Zinken (86) an einem Steg des Kanalglieds befestigt ist und an einem Schenkel des Kanals auf einer der Stelle, an der sich der Zinken (86) von dem Spiralabschnitt (88) erstreckt, gegenüberliegenden Seite des Spiralabschnitts (88) anliegt.

## Revendications

1. Ramasseur (60) comportant un rabatteur (68, 70, 72) ayant une pluralité de barres porte-dents (80) équipées d'une pluralité de dents flexibles (84) ayant des pointes (86) pour s'engager avec la récolte et la déplacer lorsque le rabatteur (68, 70, 72) tourne lors du fonctionnement, lesdites dents flexibles (84) étant chacune construites en fil à ressort accouplé à une barre porte-dents associée parmi lesdites barres porte-dents (72), une section de ressort hélicoïdal (88) étant reliée à chacune desdites au moins certaines pointes (86), et formant un prolongement de celles-ci, et définissant un support élastique accouplé à ladite barre porte-dents associée parmi lesdites barres porte-dents (80), **caractérisé en ce qu'**au moins certaines desdites dents flexibles (84) sont non circulaires en section transversale et chacune comporte une pointe (86) ayant des première et deuxième faces (a, b) parallèles avant et arrière essentiellement planes, tel que considéré par rapport à un sens de déplacement de ladite pointe pendant le fonctionnement ; lesdites première et deuxième faces étant reliées par des faces latérales (c, d) opposées planes et parallèles.

2. Ramasseur (60) selon la revendication 1, dans lequel ladite première face (a, b) parallèle essentiellement plane a une dimension en largeur qui est supérieure à une dimension en largeur desdites troisième et quatrième faces planes (c, d).

3. Ramasseur (60) selon la revendication 2, dans lequel des faces adjacentes (a, b, c, d) sont reliées par des coins arrondis (120).

4. Ramasseur (60) selon l'une des revendications 1 à 3, dans lequel lesdites barres porte-dents (80) sont chacune définies par un élément de canal ; et chacune desdites au moins certaines pointes (86) a sa section hélicoïdale (88) montée sur une âme de l'élément de canal et en appui contre une patte dudit canal d'un côté opposé de ladite section hélicoïdale (88) par rapport à l'emplacement où ladite pointe (86) s'étend à partir de ladite section hélicoïdale (88).
